# FASCICULE DE BREVET EUROPEEN

(11) **EP 2 783 885 B1**
(45) Date de publication et mention de la délivrance du brevet: **09.01.2019**
(21) Numéro de dépôt: 14161309.1
(22) Date de dépôt: 24.03.2014
(51) Int. Cl.: B60G 13/18, F16F 1/13, F16F 7/108

(54) **Dispositif de décalage et/ou d'atténuation de mode vibratoire comportant un corps pesant**
Vorrichtung zum Verschieben oder Verringern des Schwingungsgipfels mit einem Masse-Element
Device for shifting or attenuating the vibration mode comprising a mass element

(30) Priorité: 26.03.2013 FR 1352720
(43) Date de publication de la demande: 01.10.2014
(73) Titulaire: SumiRiko SD France S.A.S., 58300 Decize Cedex (FR)
(72) Inventeur: Jandot, Gérard, 58000 NEVERS (FR); Skiera, Jean-François, 58340 CERCY LA TOUR (FR); Dupuis, Frédéric, 58000 NEVERS (FR); Israel, Alain, 58300 SAINT-LEGER DES VIGNES (FR)
(74) Mandataire: Derambure, Christian

(56) Documents cités:
- EP-A1- 1 081 407
- DE-A1- 19 707 617
- FR-A1- 2 945 476
- US-A1- 2011 121 500

## Description

L'invention concerne, de façon générale, le domaine technique des dispositifs de décalage et/ou d'atténuation de mode vibratoire et, en particulier, celui des dispositifs de décalage et/ou d'atténuation de mode vibratoire à ressort, comme par exemple les suspensions pour véhicules.

Plus précisément, l'invention porte sur la question de la limitation des perturbations vibratoires d'un dispositif de décalage et/ou d'atténuation de mode vibratoire à ressort qui sont, notamment dans le cas des ressorts de suspension, génératrices de bruyance.

Il est connu de l'art antérieur différentes solutions visant à limiter les modes vibratoires indésirables des ressorts.

La publication DE-A-19707617 montre un dispositif selon le préambule de la revendication 1.

La publication FR 2945 476 porte sur une suspension de véhicule comprenant un ressort hélicoïdal, un organe de support avec une première assise et une seconde assise, et un corps pesant (ou batteur à inertie). Le corps pesant est solidarisé autour d'une portion de spire et ne peut se déplacer substantiellement le long de la spire, et le corps pesant comporte un noyau intégré dans une enveloppe en élastomère. Le réglage de la masse du noyau permet d'ajuster la fréquence propre du corps pesant (ou batteur à inertie) pour réduire les vibrations du ressort. Cette publication enseigne que lors des oscillations de la partie centrale du ressort suivant l'axe X, les bras du batteur représentant des masses fixées de manière souple au fil par des liaisons qui sont élastiques, vont se déplacer par rapport à ce fil suivant cet axe X. Par conséquent, cette publication n'enseigne pas que le corps pesant ne pourrait pivoter autour d'un axe de la portion des spires, tout au contraire.

La publication US 2011/121500 porte sur un dispositif pour atténuer les vibrations comportant un ressort hélicoïdal, un organe de support et un corps pesant fixé sur au moins une spire du ressort. Dans un mode de réalisation, le corps pesant comporte un noyau entièrement surmoulé en élastomère. Cette publication enseigne que le dispositif est élastiquement déplaçable en réponse à un mouvement d'oscillation. Par conséquent, cette publication n'enseigne pas que le corps pesant ne pourrait coulisser le long de la spire et pas davantage pivoter autour d'un axe de la portion des spires, tout au contraire.

La publication EP 1081407 concerne un dispositif comprenant un ressort hélicoïdal et un corps pesant qui comporte une masse. Cette publication ne décrit pas une enveloppe enveloppant un noyau.

La publication FR1308763 se rapporte à un dispositif pour véhicules comportant un ressort à spires. Une bague en caoutchouc est disposée sur une extrémité de ressort de façon à former une interface entre l'extrémité du ressort et une surface d'appui.

La publication WO 2012/139782 porte sur un dispositif dans lequel une colle est prévue entre les extrémités du ressort et les garnitures de ressort. La colle permet de réaliser une interface, évitant ainsi un contact direct entre le ressort et les garnitures de ressort.

De telles réalisations permettent de limiter la transmission de la charge et ainsi de réaliser un filtrage vibratoire à l'extrémité du ressort en liaison avec la surface d'appui qui la reçoit. Toutefois, il a également été observé qu'il persiste des modes vibratoires, notamment pour ce qui est des spires entre les extrémités des ressorts.

Dans le contexte de l'invention, le dispositif de décalage et/ou d'atténuation de mode vibratoire comprend un ressort hélicoïdal comportant un axe de compression, une première extrémité de ressort et une seconde extrémité de ressort et une pluralité de spires s'étendant selon l'axe de compression entre la première extrémité et la seconde extrémité. Le dispositif de décalage et/ou d'atténuation de mode vibratoire comprend également un organe de support comportant une première assise et une seconde assise. La première assise est destinée à recevoir en appui la première extrémité du ressort, et la seconde assise est destinée à recevoir en appui la seconde extrémité de ressort. Le dispositif de décalage et/ou d'atténuation de mode vibratoire comprend en outre un corps pesant.

Toutefois, il a également été observé qu'il persiste des modes vibratoires, notamment pour ce qui est des spires entre les extrémités des ressorts, qui peuvent être génératrices de bruyance. Il existe par conséquent le besoin de limiter les perturbations vibratoires pour ce qui est de ces spires tout en garantissant un dispositif de décalage et/ou d'atténuation de mode vibratoire simple à mettre en oeuvre sans augmentation excessive démesurée des coûts de fabrication.

À cette fin, le dispositif de décalage et/ou d'atténuation de mode vibratoire selon l'invention, par ailleurs conforme à la définition donnée ci-dessus, est caractérisé par le fait que le corps pesant est localisé solidaire autour d'une portion de spires du ressort entre la première extrémité et la seconde extrémité de ressort. La solidarisation du corps pesant à ladite portion de spires est agencée de sorte que le corps pesant d'une part ne peut se déplacer substantiellement le long de la spire, d'autre part ne peut pivoter autour d'un axe central de la portion de spires. Le corps pesant comporte un noyau réalisé dans un premier matériau et une enveloppe réalisée dans un deuxième matériau, le deuxième matériau étant différent du premier matériau. Le corps pesant a une masse dépendante des modes vibratoires du ressort de façon à réaliser un décalage et/ou une atténuation du mode vibratoire indésirable des spires du ressort.

Grâce à cette réalisation, un décalage d'un mode vibratoire ou une atténuation d'un mode vibratoire du ressort en appui sur sa première assise et sa deuxième assise est réalisé par augmentation locale de la masse du ressort, sans impacter substantiellement la mise en oeuvre du dispositif de décalage et/ou d'atténuation de mode vibratoire.

Selon une réalisation, le corps pesant s'étend le long de la portion de spires sur une section angulaire fonction de la masse du corps pesant, ladite masse du corps pesant étant elle-même fonction du mode vibratoire à décaler et/ou atténuer. L'étendue de la section angulaire permet la mise en oeuvre d'un corps pesant particulièrement lourd, mais discret et peu encombrant, n'impactant pas sensiblement les propriétés de décalage et/ou d'atténuation de mode vibratoire du dispositif.

Selon une réalisation, le corps pesant comporte une partie creuse, la partie creuse a une circonférence intérieure sensiblement cylindrique, et l'axe de cylindre de la partie creuse est sensiblement confondu avec l'axe central de la portion de spires. Le corps pesant peut ainsi facilement être solidarisé sur la portion de spires du ressort. L'expression portion de spires du ressort n'est pas limitative, et peut comprendre une portion s'étendant sur plusieurs spires du ressort ou encore une ou plusieurs portions s'étendant sur une seule spire de ressort.

Selon une réalisation, le corps pesant a la forme d'une portion de tore ouvert de section extérieure sensiblement ovale. La structure du corps pesant lui assure une compacité certaine et réduit son encombrement potentiel.

Selon une réalisation, le premier matériau a une première densité, le deuxième matériau a une deuxième densité, et la première densité est supérieure à la deuxième densité. Le changement de densité avec un noyau interne plus dense que l'enveloppe extérieure permet entre autres au corps pesant d'avoir une surface extérieur plus élastique (assurant par exemple une fonction antibruit entre les spires du ressort), et de conserver une masse conséquente que le corps pesant ne pourrait pas atteindre si celui-ci n'était constitué que d'un seul matériau.

Selon une réalisation, le deuxième matériau est un matériau polymère, et de préférence élastomère. Les matériaux polymères, et plus particulièrement les élastomères sont reconnus pour leurs propriétés élastiques.

Selon une réalisation, le noyau est composé d'une première partie de noyau et d'une deuxième partie de noyau disjointes l'une de l'autre et reliées entre elles par l'enveloppe. Les deux parties de noyau permettent non seulement une augmentation du poids total du corps pesant dans un espace réduit, mais en plus assurent des fonctions d'équilibrage du corps pesant sur le ressort.

Selon une réalisation, l'enveloppe est composée d'une première partie d'enveloppe et d'une seconde partie d'enveloppe, la première partie d'enveloppe est surmoulée sur la première partie de noyau pour former une première partie de corps pesant, la seconde partie d'enveloppe est surmoulée sur la seconde partie de noyau pour former une seconde partie de corps pesant, et la première partie de corps pesant et la seconde partie de corps pesant sont adaptées pour être fixées sur la portion de spires du ressort. Cette réalisation permet un assemblage simplifié du corps pesant sur le ressort et le surmoulage de chacune des parties d'enveloppe sur la partie de noyau correspondant peut être réalisé par moulage par injection.

Selon une réalisation complémentaire, le dispositif de décalage et/ou d'atténuation de mode vibratoire comporte en outre au moins une sangle de sécurisation, la première partie d'enveloppe comporte au moins une rainure de passage de sangle, la seconde partie d'enveloppe comporte au moins une rainure de passage de sangle, et ladite sangle est disposée dans la rainure de passage de sangle de la première partie d'enveloppe et dans la rainure de passage de sangle de la seconde partie d'enveloppe. Ainsi, une sangle de sécurisation peut aisément être mise en place sur le dispositif de décalage et/ou d'atténuation de mode vibratoire restant proche de l'épaisseur de l'enveloppe. afin de ne pas modifier le comportement du dispositif de décalage et/ou d'atténuation de mode vibratoire.

Selon une réalisation complémentaire, la première partie de noyau et la deuxième partie de noyau sont agencées respectivement de part et d'autre de la portion de spires du ressort dans un plan transversal ayant pour normale l'axe de compression. Cet agencement assure un équilibrage du corps pesant sur le ressort.

Selon une réalisation complémentaire, le corps pesant a une première extrémité de corps et une seconde extrémité de corps selon l'axe central de la portion de spires, et la première partie de noyau et/ou la deuxième partie de noyau s'étend(ent) de la première extrémité de corps à la seconde extrémité de corps. En d'autres termes, la première partie de noyau et/ou la deuxième partie de noyau s'étendent sur toute la longueur du corps pesant, ce qui permet d'augmenter son poids sur toute une section angulaire prédéterminée.

Selon une réalisation, l'enveloppe est en contact avec la portion de spires et le corps pesant est solidarisé à la spire par adhérisation à chaud ou adhérisation à froid de l'enveloppe sur la portion de spires. Ces techniques d'adhérisation à froid ou à chaud permettent une fixation robuste du corps pesant sur la portion de spires désirée.

Selon une réalisation alternative, la sangle de sécurisation est adaptée pour solidariser et maintenir le corps pesant sur la portion de spire du ressort. La sangle, qui peut éventuellement être remplacée par tout type de moyen d'assemblage rapporté, assure un maintien et un assemblage du corps pesant sur la portion de spire du ressort simple à mettre en oeuvre.

Selon une réalisation, le corps pesant est réalisé en plusieurs secteurs ce qui permet un meilleur suivi des atténuations et/ou décalage de mode vibratoire indésirables et diminue les perturbations sur le ressort.

Selon un second aspect, l'invention a pour objet un corps pesant spécialement destiné à être associé à un ressort hélicoïdal tel qu'il a été précédemment décrit, qui comprend un noyau réalisé dans un premier matériau et une enveloppe réalisée dans un deuxième matériau.

On décrit maintenant brièvement les figures des dessins.
La figure 1 est une vue d'ensemble en perspective d'un dispositif de décalage et/ou d'atténuation de mode vibratoire comportant un ressort hélicoïdal, une première assise et une seconde assise et un corps pesant selon l'invention.
La figure 2 est une vue en perspective du corps pesant de la figure 1.
La figure 3 est une vue en coupe longitudinale à échelle agrandie du corps pesant de la figure 1.
La figure 4 est une vue en coupe suivant la ligne repérée IV-IV à la figure 3.
La figure 5 est une vue en perspective d'un dispositif de décalage et/ou d'atténuation de mode vibratoire selon une variante de réalisation.
La figure 6a est une vue en perspective d'une première partie de corps pesant du corps pesant du dispositif de décalage et/ou d'atténuation de mode vibratoire de la figure 5.
La figure 6b est une vue en perspective d'une seconde partie de corps pesant du corps pesant du dispositif de décalage et/ou d'atténuation de mode vibratoire de la figure 5.
La figure 7 est une vue en perspective de deux sangles de sécurisation adaptées pour être placées autour de la première partie de corps pesant et de la seconde partie de corps pesant des figures 5a et 5b.
La figure 8 est une vue en perspective d'un corps pesant d'un dispositif de décalage et/ou d'atténuation selon une deuxième variante de réalisation.
La figure 9 est une vue de dessus du corps pesant de la figure 8.

Ci-après un exposé détaillé de plusieurs modes de réalisation de l'invention assorti d'exemples et de référence aux dessins.

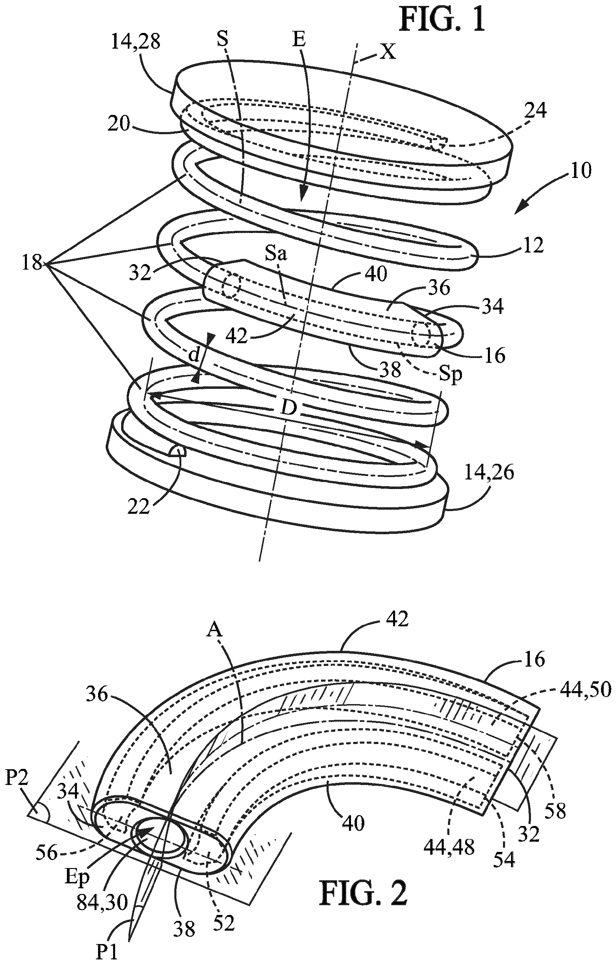

La figure 1 illustre un mode de réalisation d'un dispositif de décalage et/ou d'atténuation de mode vibratoire 10 selon l'invention.

Le dispositif de décalage et/ou d'atténuation de mode vibratoire 10 comporte un ressort hélicoïdal 12 (encore appelé ci-après ressort 12), un organe de support 14 ainsi qu'un dispositif de limitation des modes vibratoires indésirables du ressort qui est ici un corps pesant 16.

Le ressort 12 s'étend longitudinalement selon un axe de compression X. Le ressort 12 comporte une pluralité de spires 18. Classiquement, le ressort hélicoïdal 12 est un ressort de compression et est composé d'un fil 20 enroulé en hélice autour de l'axe de compression X. Le ressort a un diamètre général D. Chaque tour complet de l'hélice du fil 20 forme une spire 18. En l'espèce, et tel que représenté sur la figure 1, le ressort comprend six spires 18 distinctes. Le ressort hélicoïdal 12 comporte en outre une première extrémité 22 de ressort et une seconde extrémité 24 de ressort correspondant aux deux extrémités du fil 18 enroulé formant le ressort 12. La pluralité de spires 18 s'étend entre la première extrémité 22 de ressort et la seconde extrémité 24 de ressort selon l'axe de compression X.

Chaque spire 18 a de préférence une section circulaire de diamètre de spire d. En l'espèce, tel que représenté sur la figure 1, toutes les spires 18 ont le même diamètre de spire d, qui est constant. Par exemple, le diamètre de spire d est de l'ordre de 12 millimètres (mm) lorsque le diamètre général du ressort D est de l'ordre de 150 mm. Les spires 18 du ressort 12 comportent un axe central de spire S. L'axe central de spire S forme une hélice autour de l'axe de compression X. Le diamètre général du ressort D est calculé à partir de l'axe de spire S.

La pluralité de spires 18 du ressort 12 permet de délimiter une enveloppe qui forme ce que l'on peut appeler l'espace intérieur de ressort E.

L'organe de support 14 comporte par exemple, tel qu'illustré sur la figure 1, une première assise 26 et une seconde assise 28. La première assise 26 reçoit en appui la première extrémité 22 du ressort 12. La seconde assise 28 reçoit en appui la seconde extrémité 24 du ressort 12.

Dans une application possible, le dispositif de décalage et/ou d'atténuation de mode vibratoire 10 est une suspension pour véhicule, et la première assise 26 est par exemple associée à une roue de véhicule via une coupelle métallique d'un pied d'amortisseur et la seconde assise 28 est montée associée à la caisse du véhicule et mobile en rotation par rapport à la caisse du véhicule. Toutefois, le dispositif de décalage et/ou d'atténuation de mode vibratoire 10 peut être appliqué dans d'autres types de systèmes, et pas uniquement dans le domaine automobile.

Par exemple, la première assise 26 et la seconde assise 28 sont réalisées en matériau polymère. Avantageusement la première assise 26 et la seconde assise 28 sont réalisées en élastomère. Dans une variante de réalisation, la première assise 26 et la seconde assise 28 sont réalisées en matériau thermoplastique. Ce choix de matériau permet dans la plupart des applications de limiter des perturbations vibratoires pour ce qui est des extrémités du ressort 12.

La figure 2 illustre le corps pesant 16. Le corps pesant 16 a par exemple une forme générale de portion de tore ouvert de section sensiblement ovale et comporte une partie creuse 30. Le corps pesant 16 s'étend longitudinalement selon un axe longitudinal A. L'axe longitudinal A est courbe sous forme d'hélice. L'axe longitudinal A forme une portion d'arc de cercle Pc de centre C sur un secteur angulaire entre 10° et 155°, par exemple de l'ordre de 100°. Toutefois, dans une variante de réalisation le secteur angulaire envisagé peut être supérieur à 180°.Par exemple, le secteur angulaire peut être inférieur à une spire, soit inférieur à 360°. Eventuellement, le secteur angulaire peut être inférieur à 270°, ou encore 180° ou encore être inférieur à 90°. L'étendu du secteur angulaire dépend de la masse souhaitée du corps pesant 16. En outre, la masse du corps pesant 16 est elle-même dépendante de l'atténuation et/ou du décalage de mode souhaité.

Le corps pesant 16 comporte une première extrémité 32 et une seconde extrémité 34 selon la direction longitudinale A. Le corps pesant 16 définit un premier plan médian P1 contenant l'axe longitudinal A. Le corps pesant 16 a une première face extérieure 36 et une deuxième face extérieure 38 reliées entre elles de part et d'autre par une troisième face extérieure 40 et une quatrième face extérieure 42. La première face extérieure 36 et la deuxième face extérieure 38 sont sensiblement planes et sensiblement parallèles entre elles. La première face extérieure 36 et la deuxième face extérieure 38 sont sensiblement perpendiculaires au premier plan médian P1. La première face extérieure 36, la deuxième face extérieure 38, la troisième face extérieure 40 et la quatrième face extérieure 42 définissent un espace intérieur de corps pesant Ep. Vu de l'espace intérieur de corps pesant Ep, la troisième face extérieure 40 est concave. Vu de l'espace intérieur du corps pesant Ep, la quatrième face extérieure 42 est concave. Le premier plan médian P1 définit un plan de symétrie du corps pesant 16.

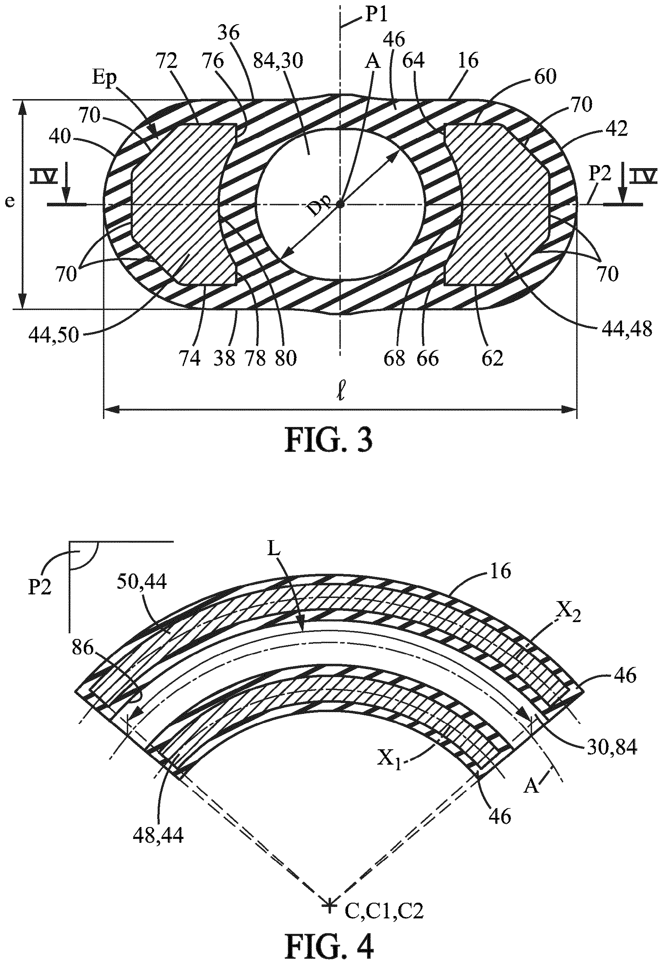

Tel que visible sur les figures 2 et 4, le corps pesant 16 définit un deuxième médian plan P2 contenant l'axe longitudinal A et perpendiculaire au premier plan médian P1. Le deuxième plan médian P2 peut également être un plan de symétrie du corps pesant 16. Par exemple, la première face extérieure 36 et la deuxième face extérieure 38 sont sensiblement parallèles au deuxième plan médian P2.

Dans des variantes de réalisation, d'autres formes peuvent être envisagées pour le corps pesant. Par exemple, le corps pesant peut être dissymétrique. En outre, le corps pesant peut avoir une section polygonale.

La distance entre la première face extérieure 36 et la deuxième face extérieure 38 définit l'épaisseur e, illustrée sur la figure 3, du corps pesant 16. La distance mesurée sur l'axe longitudinal A entre la première extrémité et la seconde extrémité du corps pesant définit la longueur L (cf. figure 4) du corps pesant. La partie creuse 30 est cylindrique et s'étend longitudinalement selon l'axe longitudinal A. La partie creuse 30 a une section circulaire de diamètre Dp. Le corps pesant a une largeur I définie par la distance maximale entre la troisième face extérieure 40 et la quatrième face extérieure 42, tel qu'illustré sur la figure 3. Par exemple, lorsque le diamètre de spire d est de l'ordre de 12 millimètres (mm) et le diamètre général du ressort D est de l'ordre de 150 mm, le corps pesant a une épaisseur de l'ordre de 17 mm et une largeur de l'ordre de 40 mm.

Le corps pesant 16 comporte un noyau 44 réalisé dans un premier matériau et une enveloppe 46 réalisée dans un deuxième matériau. Le premier matériau est différent du deuxième matériau. Le premier matériau a une densité plus importante que le deuxième matériau. Par exemple le premier matériau est un matériau métallique tandis que le deuxième matériau est un matériau polymère. Le deuxième matériau peut être un matériau élastique, tel qu'un élastomère. Par exemple, le deuxième matériau est un caoutchouc qui permet une protection anticorrosion, notamment du noyau réalisé dans un matériau métallique. Toutefois, d'autres matériaux peuvent être utilisés.

Dans une réalisation, le noyau 44 comporte une première partie de noyau 48 et une seconde partie de noyau 50 tel qu'illustré sur les figures 2 à 4. Comme représenté sur la figure 4 plus en détail, la première partie de noyau 48 s'étend longitudinalement selon un premier axe d'extension X1. Le premier axe d'extension X1 est courbe. Le premier axe d'extension X1 forme un arc de cercle de centre C1. La première partie de noyau 48 comporte une première extrémité 52 et une seconde extrémité 54 selon le premier axe d'extension X1.

La seconde partie de noyau 50 s'étend longitudinalement selon un deuxième axe d'extension X2. Le deuxième axe d'extension X2 est courbe. Le deuxième axe d'extension X2 forme un arc de cercle de centre C2. Les arcs de cercle formés par le premier axe d'extension X1 et le deuxième axe d'extension X2 sont coaxiaux, et les centres C1 et C2 sont confondus. La seconde partie de noyau comporte une première extrémité 56 et une seconde extrémité 58 selon le deuxième axe d'extension X2. Comme illustré sur la figure 4, les arcs de cercles formés par l'axe longitudinal A, le premier axe d'extension X1 et le deuxième axe d'extension X2 sont coaxiaux. Autrement dit, l'axe longitudinal A, le premier axe d'extension X1 et le deuxième axe d'extension X2 sont parallèles entre eux.

Toutefois, dans des variantes de réalisation, le noyau peut avoir une autre structure. Ainsi, dans une variante de réalisation, le noyau est formé d'une unique pièce. Dans une autre variante de réalisation, le noyau comporte une pluralité de partie supérieure à deux. Le noyau peut également être sphérique et ne pas avoir de direction privilégiée dans lequel il s'étend.

La première partie de noyau 48 a une section transversale polygonale. Plus précisément, la section de la première partie de noyau 48 a sept arêtes sensiblement rectilignes et une huitième arête courbe qui ferme la section de la première partie de noyau 48. Les huit arêtes définissent un espace intérieur de section. La huitième arête vue de l'espace intérieur de section a une forme sensiblement convexe.

Dans une variante de réalisation, le noyau et/ou la première partie de noyau et/ou la deuxième partie de noyau peut (peuvent) avoir une section circulaire, ou encore ovale.

A partir de chacune des arêtes de la première partie de noyau 48 s'étend longitudinalement une face extérieure de la première partie de noyau 48. La première partie de noyau 48 a une première face extérieure 60 et une deuxième face extérieure 62, planes, qui s'étendent sensiblement parallèles l'une par rapport à l'autre. Tel qu'illustré sur la figure 2, la première face extérieure 60 et la deuxième face extérieure 62 de la première partie de noyau sont sensiblement parallèles au deuxième plan médian P2. Toutefois, dans des variantes de réalisation, un autre agencement de la première face extérieure et de la deuxième face extérieure peut être prévu.

La première face extérieure 60 est prolongée d'une part par une première face intérieure 64. La deuxième face extérieure 62 est prolongée par une deuxième face intérieure 66. La première face intérieure 64 et la deuxième face intérieure 66 sont reliées entre elle par une troisième face intérieure 68, s'étendant à partir de l'arête courbe et formant une face concave vue du coté de l'espace intérieur de section. Enfin, d'autre part, la première face extérieure 60 est reliée à la deuxième face extérieure 62 par trois surfaces planes 70. Les trois surfaces planes 70 sont agencées les unes par rapport aux autres avec un angle non nul. La première face extérieure 60, la deuxième face extérieure 62, la première face intérieure 64, la deuxième face intérieure 66, la troisième face intérieure 68 et les trois surfaces planes 70 s'étendent toutes longitudinalement selon la première direction d'extension X1.

Dans une réalisation, la première partie de noyau 48 est symétrique par rapport au deuxième plan médian P2 défini ci-dessus.

La forme de la première partie de noyau est donnée ici à titre d'exemple. La première partie de noyau peut, dans des variantes de réalisation adopter d'autres formes, et par exemple avoir une section circulaire ou ovale, et définir un cylindre s'étendant longitudinalement selon la première direction d'extension X1.

La deuxième partie de noyau 50 a une forme générale sensiblement semblable à la première partie de noyau 48, et comporte une première face extérieure 72, une deuxième face extérieure 74, une première face intérieure 76, une deuxième face intérieure 78, une troisième face intérieure 80 et trois surfaces planes 82 qui s'étendent toutes longitudinalement selon la première direction d'extension X1.

Toutefois, dans une variante de réalisation, la deuxième partie de noyau 50 peut avoir une forme générale sensiblement différente de la première partie de noyau 48.

La première partie de noyau 48 est adjacente à la deuxième partie de noyau 50. Les faces courbes des première et seconde parties de noyau 48, 50 se font face l'une par rapport à l'autre. En d'autres termes, la troisième face intérieure 68 de la première partie de noyau 48 et la troisième face intérieure 80 de la deuxième partie de noyau 50 sont en regard l'une de l'autre. La première partie de noyau 48 n'est pas en contact avec la deuxième partie de noyau 50. En d'autres termes, la première partie de noyau 48 et la seconde partie de noyau 50 sont disjointes l'une de l'autre. La première partie de noyau 48 et la deuxième partie de noyau 50 sont contenus dans un secteur circulaire ayant pour centre C1 et s'étendant sur une section angulaire entre 10° et 150°, par exemple entre 90° et 100°.

Dans des variantes de réalisation, la première partie de noyau peut être en contact avec la deuxième partie de noyau.

Le premier plan médian P1 définit un plan de symétrie du noyau 44. Plus particulièrement, la première partie de noyau 48 est symétrique par rapport au premier plan médian P1 à la deuxième partie de noyau 50.

Tel qu'illustré sur les figures 2 à 4, la première partie de noyau 48 et la deuxième partie de noyau 50 sont entourées entièrement par l'enveloppe 46. L'enveloppe 46 forme alors une surépaisseur sur la première face extérieure 60, la deuxième face extérieure 62, la première face intérieure 64, la deuxième face intérieure 66, la troisième face intérieure 68 et les trois surfaces planes 70 de la première partie de noyau 48 et sur la première face extérieure 72, la deuxième face extérieure 74, la première face intérieure 76, la deuxième face intérieure 78, la troisième face intérieure 80 et les trois surfaces planes 82 de la seconde partie de noyau 44. Par exemple, l'enveloppe 46 est surmoulée sur la première partie de noyau 48 et sur la deuxième partie de noyau 50. Lorsque la première partie de noyau 48 et la seconde partie de noyau 50 sont disjointes l'une de l'autre, l'enveloppe 46 relie la première partie de noyau 48 à la seconde partie de noyau 50.

La surépaisseur formée par l'enveloppe 46 autour du noyau 44 peut être sensiblement constante. Dans des variantes de réalisation, la surépaisseur varie.

Dans une variante de réalisation, l'enveloppe 46 entoure partiellement la première partie de noyau 48 et la seconde partie de noyau 50. Par exemple, l'enveloppe 46 ne recouvre pas la première extrémité 52 de la première partie de noyau 48 ni la seconde extrémité 54 de la première partie de noyau 48. En outre, dans une variante de réalisation où le noyau est en une seule partie l'enveloppe entoure les faces extérieures du noyau.

L'enveloppe 46 comporte une partie creuse 84 qui correspond à la partie creuse 30 du corps pesant 16. En d'autres termes, la partie creuse 84 de l'enveloppe 46 est confondue avec la partie creuse 30 du corps pesant 16, ou encore la partie creuse 84 de l'enveloppe 46 forme la partie creuse 30 du corps pesant 16 telle que précédemment définie. La partie creuse 84 est située entre la première partie de noyau 48 et la seconde partie de noyau 50. En d'autres termes, première partie de noyau 48 et la seconde partie de noyau 50 sont situés de part et d'autre de la partie creuse 84. La partie creuse 84 est définie par une paroi intérieure 86 d'enveloppe 46. La paroi intérieure 86 d'enveloppe 46 est cylindrique à section transversale circulaire et s'étend longitudinalement selon l'axe longitudinal A.

L'enveloppe 46 relie la première partie de noyau 48 à la deuxième partie de noyau 50 et définit la forme générale extérieure du corps pesant 16. En d'autres termes, la forme générale du corps pesant 16 est définie par la forme générale extérieure de l'enveloppe 46. Le corps pesant 16 forme une unique pièce.

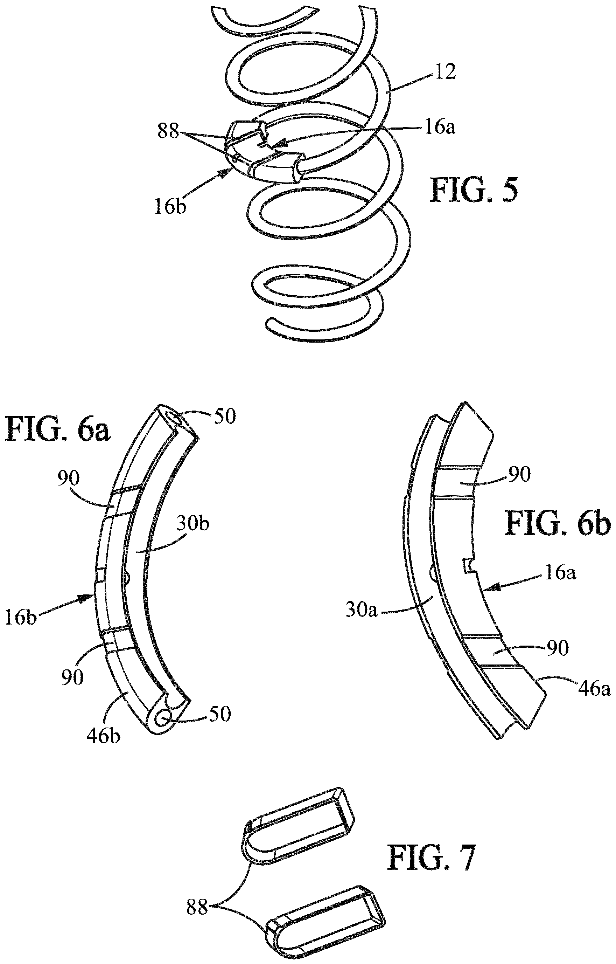

Dans une réalisation, et tel qu'illustré sur les figures 5, 6a et 6b, le corps pesant 16 est en deux parties et comporte une première partie de corps pesant 16a et une seconde partie de corps pesant 16b. La première partie de corps pesant 16a comporte une première partie d'enveloppe 46a et la première partie de noyau 48. La première partie de noyau 48 est enrobée par la première partie d'enveloppe 46a par moulage par injection. La seconde partie de corps pesant 16b comporte une seconde partie d'enveloppe 46b et la seconde partie de noyau 50. La seconde partie de noyau 50 est enrobée par la seconde partie d'enveloppe 46b par moulage par injection. La première partie de corps pesant 16a définit une première partie creuse 30a et la seconde partie de corps pesant 16b définit une seconde partie creuse 30b. La première partie creuse 30a et la seconde partie creuse 30b sont adaptées pour former la partie creuse 30 ci-dessus décrite lorsque la première partie creuse 30a et la seconde partie creuse 30b sont en regard l'une de l'autre.

Comme visible sur la figure 5, la première partie de corps pesant 16a est différente de la seconde partie de corps pesant 16b. Ainsi, par exemple la première partie de corps pesant a une section sensiblement rectangulaire.

La première partie de corps pesant est destinée à être disposée dans l'espace intérieur de ressort E, et la deuxième partie de corps pesant 16b est destinée à être disposée hors de l'espace intérieur de ressort E. La première partie de corps pesant 16a et la deuxième partie de corps pesant 16b sont disposées de part et d'autre d'une portion de spires Sp prédéterminée choisie pour réaliser un décalage de mode vibratoire indésirable du dispositif de décalage et/ou d'atténuation de mode vibratoire. La première partie de noyau 48 soit dans l'espace intérieur de ressort E, et la deuxième partie de noyau 50 soit hors de l'espace intérieur de ressort E.

La portion de spires Sp prédéterminée peut éventuellement s'étendre sur plusieurs spires du ressort. La longueur de la portion de spires Sp est directement dépendante de la longueur L du corps pesant 16 et lui est égale.

La première partie de corps pesant 16a et la seconde partie de corps pesant 16b sont solidarisées l'une à l'autre par adhérisation à chaud ou à froid pour être surmoulées sur le ressort 12, et plus particulièrement sur la portion de spires Sp préparée et éventuellement dégraissée. Plus précisément, la première partie de corps pesant 16a et la seconde partie de corps pesant 16b sont fixées sur leur zone en contact avec la portion de spires Sp par adhérisation. Une étape de préparation et éventuellement de dégraissage et/ou d'étuvage du ressort a lieu avant l'étape d'adhérisation. Cette étape permet d'assurer la qualité de l'adhérisation du corps pesant 16 sur la portion de spires Sp. En d'autres termes, le corps pesant 16 est réalisé en deux parties distinctes qui sont encollées sur le ressort sur la portion de ressort Sp désirée. Le corps pesant 16 est en l'espèce fixé à la spire sur toute sa longueur L, et plus précisément sur toute la longueur de la partie creuse 30 du corps pesant 16. En d'autres termes, le corps pesant 16 est assemblé solidaire de la portion de spires Sp sur toute sa longueur L par l'intermédiaire de la paroi intérieure 86 d'enveloppe 46 qui est en contact direct avec la portion de spires Sp du ressort.

En outre, et tel qu'illustré sur les figures 5 à 7, des sangles de sécurisation 88 peuvent être prévues. Tel qu'illustré sur la figure 5, le dispositif de décalage et/ou d'atténuation de mode vibratoire comporte deux sangles de sécurisation 81. Toutefois, dans des variantes de réalisation, une seule ou encore plus de deux sangles peuvent être envisagées. Les sangles de sécurisation 88 sont mises en place dans des rainures de passage de sangle 90 prévues sur la première partie de corps pesant 16a et sur la deuxième partie de corps pesant 16b. Les rainures de passage de sangle 90 sont réalisées dans l'épaisseur de la première partie d'enveloppe 46a et dans l'épaisseur de la seconde partie d'enveloppe 46b. La dimension des rainures (aussi bien leur largeur que leur profondeur) correspond sensiblement aux dimensions des sangles de sorte que les sangles créent un minimum de surépaisseur sur la surface extérieure de l'enveloppe 46 lorsqu'elles sont disposées dans les rainures de passage 90. Les sangles de sécurisation viennent entourer la première partie de corps pesant 16a et la seconde partie de corps pesant 16b et viennent sécuriser leur position l'une par rapport à l'autre lorsque la première partie de corps pesant 16a et la deuxième partie de corps pesant 16b sont encollées sur la portion de spires Sp. Plus précisément les sangles préviennent un éventuel éloignement de la première partie de corps pesant 16a par rapport à la seconde partie de corps pesant 16b en maintenant la première et la seconde partie de corps pesant 16a, 16b en contact l'une avec l'autre en appliquant un effort de compression sur l'ensemble du pourtour des deux parties de corps pesant 16a, 16b formant le corps pesant 16. Une technique d'adhérisation à chaud peut être utilisée. Il est également possible d'utiliser une technique d'adhérisation à froid. Ces techniques d'adhérisation permettent une adhérisation sur la portion de spires du ressort efficace, en particulier lorsque l'enveloppe est réalisée en matériau élastomère. On utilise par exemple une presse conventionnelle pour assurer de façon pérenne le surmoulage du corps pesant 16 (en une ou en deux parties) sur la portion de spires Sp. La presse intensifie la réticulation de la colle.

Les sangles 88 épousent la forme des rainures 90 pratiquées dans l'enveloppe 46 du corps pesant. Ainsi, lorsque la première partie de corps pesant 16a est différente de la seconde partie de corps pesant 16b, par exemple lorsque la première partie de corps pesant 16a a une section de forme rectangulaire et la seconde partie de corps pesant 16b a une section en forme d'arc de cercle, à supposer que les rainures aient une épaisseur constante et suivent la forme extérieure globale du corps pesant 16, les sangles 88 peuvent avoir une première extrémité ayant une section de forme rectangulaire et une seconde extrémité ayant une section en forme d'arc de cercle.

Dans une variante de réalisation les sangles peuvent être remplacées par des clips, cavaliers, colliers de fixation ou encore tout autre élément d'assemblage.

En outre, il est également possible d'envisager que la première partie de corps pesant 16a et la seconde partie de corps pesant 16b ne sont pas solidarisées l'une à l'autre par adhérisation à chaud ou à froid pour être surmoulées sur le ressort 12, mais que le rôle de maintien sur le ressort et d'assemblage de la première partie de corps pesant 16a et de la seconde partie de corps pesant 16b est réalisé uniquement par l'intermédiaire des sangles, ou encore des clips, cavaliers, colliers de fixation ou encore tout autre élément d'assemblage. Par exemple, les sangles 88 réalisent un serrage de la première partie de corps pesant 16a et de la seconde partie de corps pesant 16b autour de la portion de spires du ressort 12 et constituent l'unique élément de fixation et de maintien du corps pesant 16 sur le ressort 12.

Dans une variante de réalisation, la première partie de corps 16a peut coopérer avec la seconde partie de corps 16b par complémentarité de forme. Par exemple, la première partie de corps 16a peut comporter une gorge adaptée pour recevoir une nervure de la seconde partie de corps 16b. La première partie de corps 16a et la seconde partie de corps 16b peuvent en outre être assemblées par une liaison mécanique de type queue d'aronde. Dans une variante de réalisation, un assemblage de type clip, à savoir un assemblage à serrage effectué uniquement par la résistance à la déformation inhérente au matériau dont est fait la première et la seconde parties de corps, peut être réalisé.

En l'espèce, tel qu'illustré sur les figures 1 et 5, la première partie de noyau 48 et la deuxième partie de noyau 50 sont situées dans un plan transversal ayant pour normale la direction de compression X de part et d'autre de la portion de spires Sp. Autrement dit, la première partie de noyau est située dans l'espace intérieur de spire E, tandis que la seconde partie de noyau est située hors de l'espace intérieur de spore E. Ainsi, l'équilibre global du ressort n'est pas menacé.

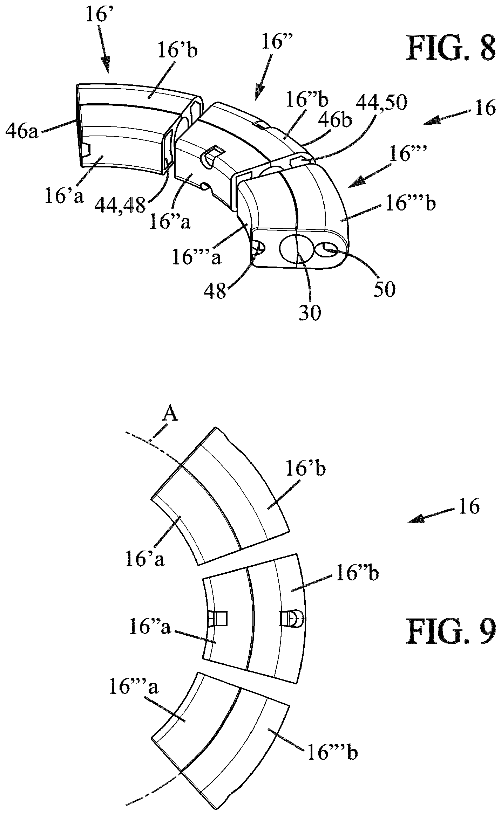

Dans une autre variante de réalisation, et tel qu'illustré sur les figures 8 et 9, le corps pesant est en plusieurs secteurs. Par exemple, comme représenté sur les figures 8 et 9 le corps pesant est en trois secteurs. Chacun des trois secteur est composé d'une première partie de secteur 16'a, 16"a, 16"'a, et d'une seconde partie de secteur 16'b, 16"b et 16"'b. Chacun des secteurs 16', 16", et 16'" est adhérisé, par exemple de façon séparée, sur la portion de spire de ressort. Cette réalisation en plusieurs secteurs permet de réduire les perturbations sur le ressort par rapport à un corps pesant monobloc et permet également un bon suivi du comportement du ressort.

Chacun des secteurs peut avoir une section angulaire sensiblement semblable, ou au contraire des sections angulaires différentes. La position sur le ressort de chacun des secteurs dépend du comportement du ressort, et des modes vibratoires à décaler et/ou atténuer. Par exemple, les secteurs peuvent être à distances les uns des autres ou au contraire être collés les uns aux autres.

En l'espèce chacun des secteurs comporte une première partie de noyau 48 et une seconde partie 50 de noyau. Toutefois, dans des variantes de réalisation un autre agencement peut être envisagé, par exemple un secteur peut ne comporter qu'une première partie de noyau alors que les autres secteurs comportent des premières et secondes parties de noyau.

En outre, le corps pesant peut également comporter plusieurs secteurs monoblocs.

En fonctionnement du ressort 12, celui-ci réalise alternativement des mouvements de compression (où les spires se resserrent (où la distance entre deux spires augmente). Les mouvements de compression et de détente (ou d'expansion) sont alternatifs et répétés.

La largeur I du corps pesant ne perturbe pas le comportement du ressort et est telle que le corps pesant 16 en position sur la portion de spires Sp n'interfère pas avec des spires diamétralement opposées à la portion de spires Sp.

Le corps pesant 16 suit sensiblement la forme de la portion de spires Sp sur un secteur angulaire entre 20° et 150°, par exemple sur un secteur angulaire de 100°.

Dans une variante de réalisation, plusieurs corps pesant peuvent être prévus sur le ressort 12. Par exemple, deux corps pesant distincts peuvent être assemblés sur deux portions de spires différentes du ressort 12. Les deux corps pesant peuvent être assemblés sur le ressort de façon simultanée. Eventuellement, le deuxième corps pesant peut être fixé sur le ressort lors d'une étape de fixation distincte de l'étape d'assemble du premier corps pesant sur le ressort. Par exemple, le deuxième corps pesant peut être fixé sur le ressort par adhérisation à froid.

Dans une autre variante de réalisation, le corps pesant peut s'étendre le long de plusieurs spires du ressort 12.

Le corps pesant 16 vient augmenter localement le poids de la portion de spires Sp sur lequel il est fixé. Le noyau 44 permet d'obtenir une masse de corps pesant 16 conséquente qui ne serait pas atteinte si le corps pesant 16 n'était réalisé qu'en matériau polymère, par exemple. La répartition des masses de part et d'autre de la portion de spires Sp vient améliorer le comportement dynamique du dispositif de décalage et/ou d'atténuation de mode vibratoire 10 par rapport à une répartition de masse qui serait unilatérale (d'un coté seulement du ressort). En outre, l'enveloppe 46 permet d'augmenter le confort acoustique en amortissant les chocs entre deux spires 18, qui sont par exemple métalliques. Le corps pesant 16 est disposé à un endroit désiré déterminé en fonction des modes vibratoires indésirables du dispositif de décalage et/ou d'atténuation de mode vibratoire 10. Les modes vibratoires indésirables sont déterminés sur des bancs d'essais, par exemple des machines de mesure dynamique. La présence du corps 16 pesant vient localement créer un moment qui va permettre un décalage ou une atténuation du mode vibratoire indésirable. En d'autres termes, une variation locale de la charge du ressort 12 assure un décalage ou une atténuation des fréquences vibratoires indésirables du dispositif de décalage et/ou d'atténuation de mode vibratoire 10. Le dispositif de décalage et/ou d'atténuation de mode vibratoire ainsi obtenu est en outre endurant et le corps pesant est fixé de façon stable sur le ressort et reste assemblé sur la portion de spires du ressort définie pendant la durée de vie du dispositif de décalage et/ou d'atténuation de mode vibratoire, et en particulier pendant la durée de vie de la fonction, si le dispositif de décalage et/ou d'atténuation de mode vibratoire est une suspension de véhicule automobile.

## Revendications

1. Dispositif de décalage et/ou d'atténuation de mode vibratoire (10), notamment suspension pour véhicule, comprenant :
- un ressort hélicoïdal (12) comportant un axe de compression (X), une première extrémité de ressort (22) et une seconde extrémité de ressort (24) et une pluralité de spires (18) s'étendant selon l'axe de compression (X) entre la première extrémité de ressort (22) et la seconde extrémité de ressort (24),
- un organe de support (14) comportant une première assise (26) et une seconde assise (28), ladite première assise (26) étant destinée à recevoir en appui la première extrémité de ressort (22), et ladite seconde assise (28) étant destinée à recevoir en appui la seconde extrémité de ressort (24), et
- un corps pesant (16),
dans lequel
- le corps pesant (16) est localisé solidaire autour d'une portion de spires (Sp) du ressort (12) entre la première extrémité de ressort (22) et la seconde extrémité de ressort (24), et
- la solidarisation du corps pesant (16) à ladite portion de spires (Sp) est agencée de sorte que le corps pesant (16) d'une part ne peut se déplacer substantiellement le long de la spire (Sp) en fonctionnement du dispositif, d'autre part ne peut pivoter autour d'un axe (Sa) de la portion de spires (Sp),
**caractérisé en ce que**
- le corps pesant (16) comporte un noyau (44) réalisé dans un premier matériau et une enveloppe (46) réalisée dans un deuxième matériau, le deuxième matériau étant différent du premier matériau, et
- le corps pesant (16) a une masse dépendante des modes vibratoires du ressort (12) de façon à réaliser un décalage et/ou une atténuation du mode vibratoire des spires du ressort.

2. Dispositif de décalage et/ou d'atténuation de mode vibratoire (10) selon la revendication 1, dans lequel le corps pesant (16) s'étend le long de la portion de spires (Sp) sur une section angulaire fonction de la masse du corps pesant, ladite masse du corps pesant étant elle-même fonction du mode vibratoire à décaler et/ou atténuer.

3. Dispositif de décalage et/ou d'atténuation de mode vibratoire (10) selon l'une quelconque des revendications 1 et 2, dans lequel le corps pesant (16) comporte une partie creuse (30), la partie creuse (30) a une circonférence intérieure sensiblement cylindrique, et l'axe de cylindre de la partie creuse est sensiblement confondu avec l'axe (Sa) de la portion de spires.

4. Dispositif de décalage et/ou d'atténuation de mode vibratoire (10) selon l'une quelconque des revendications 1 à 3, dans lequel le corps pesant (16) a la forme d'une portion de tore ouvert de section extérieure sensiblement ovale.

5. Dispositif de décalage et/ou d'atténuation de mode vibratoire (10) selon l'une quelconque des revendications 1 à 4, dans lequel le premier matériau a une première densité, le deuxième matériau a une deuxième densité, et la première densité est supérieure à la deuxième densité.

6. Dispositif de décalage et/ou d'atténuation de mode vibratoire (10) selon l'une quelconque des revendications 1 à 5, dans lequel le deuxième matériau est un matériau polymère, et de préférence élastomère.

7. Dispositif de décalage et/ou d'atténuation de mode vibratoire (10) selon l'une quelconque des revendications 1 à 6, dans lequel le noyau est composé d'une première partie de noyau (48) et d'une seconde partie de noyau (50) disjointes l'une de l'autre et reliées entre elles par l'enveloppe (46).

8. Dispositif de décalage et/ou d'atténuation de mode vibratoire (10) selon la revendication 7, dans lequel l'enveloppe est composée d'une première partie d'enveloppe (46a) et d'une seconde partie d'enveloppe (46b),
la première partie d'enveloppe (46a) est surmoulée sur la première partie de noyau (48) pour former une première partie de corps pesant (16a),
la seconde partie d'enveloppe (46b) est surmoulée sur la seconde partie de noyau (50) pour former une seconde partie de corps pesant (16b), et
la première partie de corps pesant (16a) et la seconde partie de corps pesant (16b) sont adaptées pour être fixées par adhérisation sur une portion de spires (Sp) du ressort (12).

9. Dispositif de décalage et/ou d'atténuation de mode vibratoire (10) selon la revendication 8, dans lequel au moins une sangle de sécurisation (88) est en outre prévue, la première partie d'enveloppe (46a) comporte au moins une rainure de passage de sangle (90), la seconde partie d'enveloppe comporte au moins une rainure de passage de sangle (90), et ladite sangle (88) est disposée dans la rainure de passage de sangle de la première partie d'enveloppe et dans la rainure de passage de sangle de la seconde partie d'enveloppe.

10. Dispositif de décalage et/ou d'atténuation de mode vibratoire (10) selon l'une quelconque des revendications 7 à 9, dans lequel la première partie de noyau (48) et la seconde partie de noyau (50) sont agencées respectivement de part et d'autre de la portion de spires (Sp) du ressort dans un plan transversal ayant pour normale l'axe de compression (X).

11. Dispositif de décalage et/ou d'atténuation de mode vibratoire (10) selon l'une quelconque des revendications 7 à 10, dans lequel le corps pesant (16) a une première extrémité de corps (32) et une seconde extrémité de corps (34) selon l'axe central de la portion de spires, et la première partie de noyau (48) et/ou la deuxième partie de noyau (50) s'étend(ent) de la première extrémité de corps à la seconde extrémité de corps.

12. Dispositif de décalage et/ou d'atténuation de mode vibratoire (10) selon l'une quelconque des revendications 1 à 11, dans lequel l'enveloppe (46) est en contact avec la portion de spires (Sp) et le corps pesant (16) est solidarisé à la portion de spires par adhérisation à chaud ou adhérisation à froid de l'enveloppe sur la portion de spires.

13. Dispositif de décalage et/ou d'atténuation de mode vibratoire selon la revendication 9 et l'une quelconque des revendications 1 à 8 et 10 à 11, dans lequel la sangle de sécurisation (88) est adaptée pour solidariser et maintenir le corps pesant (16) sur la portion de spire (Sp) du ressort.

14. Dispositif de décalage et/ou d'atténuation de mode vibratoire selon l'une quelconque des revendications 1 à 13, dans lequel le corps pesant (16) est réalisé en plusieurs secteurs (16', 16", 16"').

15. Corps pesant (16) spécialement destiné à être associé à un ressort (12) hélicoïdal comportant un axe de compression (X), une première extrémité de ressort et une seconde extrémité de ressort et une pluralité de spires s'étendant selon l'axe de compression (X) entre la première extrémité de ressort et la seconde extrémité de ressort, de sorte à former un dispositif de décalage et/ou d'atténuation de mode vibratoire, notamment suspension pour véhicule, selon l'une quelconque des revendications 1 à 14, qui comprend un noyau (44) réalisé dans un premier matériau et une enveloppe (46) réalisée dans un deuxième matériau.

## Patentansprüche

1. Vorrichtung zur Verschiebung und/oder Dämpfung einer Schwingungsform (10), insbesondere eine Fahrzeugaufhängung, welche folgendes umfasst:
- eine Schraubenfeder (12), welche eine Verdichtungsachse (X), ein erstes Federende (22) und ein zweites Federende (24) und eine Vielzahl an Windungen (18), die sich an der Verdichtungsachse (X) entlang zwischen dem ersten Ende der Feder (22) und den zweiten Ende der Feder (24) erstrecken, enthält,
- ein Trägerelement (14), welches eine erste Auflage (26) und eine zweite Auflage (28) enthält, wobei auf der ersten Auflage (26) das erste Federende (22) und auf der zweiten Auflage (28) das zweite Federende (24) aufliegt, und
- ein Massenelement (16), in welchem
- das Massenelement (16) fest um einen Federabschnitt (Sp) der Feder (12) zwischen dem ersten Federende (22) und dem zweiten Federende (24) herum angeordnet ist, und
- die Verbindung des Massenelements (16) mit besagtem Federabschnitt (Sp) so angeordnet ist, dass sich das Massenelement (16) gemäß der Funktionsweise der Vorrichtung nicht wesentlich entlang des Federabschnitts (Sp) bewegen kann, und sich zum anderen nicht um eine Achse (Sa) des Federabschnitts (Sp) drehen kann, **dadurch gekennzeichnet, dass**
- das Massenelement (16) einen Kern (44) enthält, der aus einem ersten Material hergestellt ist, und eine Hülle (46), die aus einem zweiten Material hergestellt ist, wobei sich das zweite Material vom ersten unterscheidet, und
- das Massenelement (16) ein Gewicht aufweist, das von den Schwingungsformen der Feder (12) abhängt, sodass es eine Verschiebung und/oder Dämpfung der Schwingungsform des Federabschnitts bewirkt.

2. Vorrichtung zur Verschiebung und/oder Dämpfung einer Schwingungsform (10) nach Anspruch 1, in welcher sich das Massenelement (16) entlang des Federabschnitts (Sp) in einem Winkelquerschnitt bewegt, der vom Gewicht des Massenkörpers abhängt, wobei besagtes Gewicht des Massenkörpers wiederum von der zu verschiebenden und/oder zu dämpfenden Schwingungsform abhängt.

3. Vorrichtung zur Verschiebung und/oder Dämpfung einer Schwingungsform (10) nach einem der Ansprüche 1 und 2, in welcher das Massenelement (16) einen Hohlbereich (30) enthält, wobei der Hohlbereich (30) einen im Wesentlichen zylindrischen Innenumfang aufweist, und die Zylinderachse des Hohlbereichs im Wesentlichen mit der Achse (Sa) des Federabschnitts zusammenfällt.

4. Vorrichtung zur Verschiebung und/oder Dämpfung einer Schwingungsform (10) nach einem der Ansprüche 1 bis 3, in welcher das Massenelement (16) die Form eines offenen Torus-Abschnitts mit einem im wesentlichen ovalen Außenquerschnitt hat.

5. Vorrichtung zur Verschiebung und/oder Dämpfung einer Schwingungsform (10) nach einem der Ansprüche 1 bis 4, in welcher das erste Material eine erste Dichte und das zweite Material eine zweite Dichte hat, und die erste Dichte größer als die zweite Dichte ist.

6. Vorrichtung zur Verschiebung und/oder Dämpfung einer Schwingungsform (10) nach einem der Ansprüche 1 bis 5, in welcher das zweite Material ein Polymer und vorzugsweise ein Elastomer ist.

7. Vorrichtung zur Verschiebung und/oder Dämpfung einer Schwingungsform (10) nach einem der Ansprüche 1 bis 6, in welcher der Kern aus einem ersten Kernteil (48) und einem zweiten Kernteil (50) besteht, die voneinander getrennt und über die Hülle (46) miteinander verbunden sind.

8. Vorrichtung zur Verschiebung und/oder Dämpfung einer Schwingungsform (10) nach Anspruch 7, in welcher die Hülle aus einem ersten Hüllenteil (46a) und einem zweiten Hüllenteil (46b) besteht, wobei der erste Hüllenteil (46a) auf den ersten Kernteil (48) aufgeformt ist, um einen ersten Teil des Massenelements (16a) zu bilden, und der zweite Hüllenteil (46b) auf den zweiten Kernteil (50) aufgeformt ist, um einen zweiten Teil des Massenelementes (16b) zu bilden, und der erste Teil des Massenelementes (16a) und der zweite Teil des Massenelementes (16b) so gestaltet sind, dass sie durch eine Haftverbindung an einem Federabschnitt (Sp) der Feder (12) befestigt werden können.

9. Vorrichtung zur Verschiebung und/oder Dämpfung einer Schwingungsform (10) nach Anspruch 8, in welcher des Weiteren mindestens ein Sicherungsriemen (88) vorgesehen ist, wobei der erste Hüllenteil (46a) mindestens eine Rille zum Durchführen des Riemens (90) aufweist, der zweite Hüllenteil mindestens eine Rille zum Durchführen des Riemens (90) aufweist, und besagter Riemen (88) durch die Riemendurchführrille des ersten Hüllenteils und die Riemendurchführrille des zweiten Hüllenteils durchgeführt wird.

10. Vorrichtung zur Verschiebung und/oder Dämpfung einer Schwingungsform (10) nach einem der Ansprüche 7 bis 9, in welcher der erste Kernteil (48) und der zweite Kernteil (50) jeweils zu beiden Seiten des Federabschnitts (Sp) der Feder in einer quer verlaufenden Ebene angeordnet sind, deren Normale die Verdichtungsachse (X) ist.

11. Vorrichtung zur Verschiebung und/oder Dämpfung einer Schwingungsform (10) nach einem der Ansprüche 7 bis 10, in welcher das Massenelement (16) ein erstes Ende (32) und ein zweites Ende (34) entlang der Mittelachse des Federabschnitts aufweist, und sich der erste Kernteil (48) und/oder der zweite Kernteil (50) vom ersten Ende des Massenelements bis zum zweiten Ende des Massenelements erstrecken.

12. Vorrichtung zur Verschiebung und/oder Dämpfung einer Schwingungsform (10) nach einem der Ansprüche 1 bis 11, in welchem die Hülle (46) mit dem Federabschnitt (Sp) in Berührung kommt und das Massenelement (16) mit dem Federabschnitt durch Warmhaftung oder Kalthaftung der Hülle mit dem Federabschnitt verbunden ist.

13. Vorrichtung zur Verschiebung und/oder Dämpfung einer Schwingungsform nach Anspruch 9 und einem der Ansprüche 1 bis 8 und 10 bis 11, in welcher der Sicherungsriemen (88) so ausgelegt ist, dass er das Massenelement (16) mit dem Federabschnitt (Sp) der Feder verbindet und hält.

14. Vorrichtung zur Verschiebung und/oder Dämpfung einer Schwingungsform nach einem der Ansprüche 1 bis 13, in welcher das Massenelement (16) mit mehreren Querschnitten hergestellt ist (16', 16", 16"").

15. Massenelement (16), das so gestaltet ist, dass es verbunden werden kann mit einer Schraubenfeder (12), welche eine Verdichtungsachse (X), ein erstes Federende, ein zweites Federende und eine Vielzahl von Windungen, die sich an der Verdichtungsachse (X) zwischen dem ersten Federende und dem zweiten Federende erstrecken, enthält, so dass eine Vorrichtung zur Verschiebung und/oder Dämpfung einer Schwingungsform, insbesondere eine Fahrzeugaufhängung, nach einem der Ansprüche 1 bis 14 gebildet wird, die einen Kern (44) enthält, der aus einem ersten Material und einer Hülle (46) bestehend aus einem zweiten Material hergestellt ist.

## Claims

1. A device for shifting and/or attenuating a vibration mode (10), in particular a vehicle suspension comprising:
- a helical spring (12) including a compression axis (X), a first spring end (22) and a second spring end (24) and a plurality of turns (18) extending along the compression axis (X) between the first spring end (22) and the second spring end (24),
- a support member (14) having a first seat (26) and a second seat (28), with the first spring end (22) being intended to rest on said first seat (26) and the second spring end (24) being intended to rest on said second seat (28), and
- and a weight element (16),
wherein the weight element (16) is located so as to be secured around a portion of turns (Sp) of the spring (12), between the first spring end (22) and the second spring end (24),
- with the securing of the weight element (16) to said portion of turns (Sp) being so arranged that the weight element (16), on the one hand, cannot substantially move along the turn (Sp) when the device is operating, and on the other hand cannot pivot about the axis (Sa) of the portion of turns (Sp),
**characterized in that**
- the weight element (16) includes a core (44) made of a first material and a shell (46) made of a second material, with the second material being different from the first material, and
- the weight element (16) has a mass depending on the vibration modes of the spring (12) so as to produce a shift and/or an attenuation of the vibration mode of the spring turns.

2. A device for shifting and/or attenuating a vibration mode (10) according to claim 1, wherein the weight element (16) extends along the portion of turns (Sp) on an angular section according to the mass of the weight element, with said mass of the weight element also depending on the vibration mode to be shifted and/or attenuated.

3. A device for shifting and/or attenuating a vibration mode (10) according to any one of claims 1 and 2, wherein the weight element (16) includes a hollow portion (30), with said hollow portion (30) having a substantially cylindrical inner circumference, and the cylindrical axis of the hollow portion substantially coinciding with the axis (Sa) of the portion of turns.

4. A device for shifting and/or attenuating a vibration mode (10) according to any one of claims 1 to 3, wherein the weight element (16) has the shape of a portion of an open toroid having a substantially oval outer section.

5. A device for shifting and/or attenuating a vibration mode (10) according to any one of claims 1 to 4, wherein the first material has a first density, the second material has a second density, with the first density being higher than the second density.

6. A device for shifting and/or attenuating a vibration mode (10) according to any one of claims 1 to 5, wherein the second material is a polymeric, preferably elastomeric material.

7. A device for shifting and/or attenuating a vibration mode (10) according to any one of claims 1 to 6, wherein the core consists of a first portion of core (48) and a second portion of core (50) spaced apart and coupled together by the shell (46).

8. A device for shifting and/or attenuating a vibration mode (10) according to claim 7, wherein the shell consists of a first portion of shell (46a) and a second portion of shell (46b),
with the first portion of shell (46a) being overmoulded on the first portion of core (48) to form a first portion of weight element (16a),
with the second portion of shell (46b) being overmoulded on the second portion of core (50) to form a second portion of weight element (16b), and
the first portion of weight element (16a) and the second portion of weight element (16b) being adapted to be attached to a portion of turns (Sp) of the spring by adherization (12).

9. A device for shifting and/or attenuating a vibration mode (10) according to claim 8, wherein at least one securing strap (88) is additionally provided, the first portion of shell (46a) includes at least one groove for the passage of the strap (90), the second portion of shell includes at least one groove for the passage of the strap (90), and said strap (88) is positioned in the groove for the passage of the strap in the first portion of shell and in the groove for the passage of the strap in the second portion of shell.

10. A device for shifting and/or attenuating a vibration mode (10) according to any one of claims 7 to 9, wherein the first portion of core (48) and the second portion of core (50) are respectively arranged on either side of the portion of turns (Sp) of the spring in a transverse plane for which the compression axis (X) is the normal.

11. A device for shifting and/or attenuating a vibration mode (10) according to any one of claims 7 to 10, wherein the weight element (16) has a first element end (32) and a second element end (34) along the central axis of the portion of turns, and the first portion of core (48) and/or the second portion of core (50) extend(s) from the first element end to the second element end.

12. A device for shifting and/or attenuating a vibration mode (10) according to any one of claims 1 to 11, wherein the shell (46) is in contact with the portion of turns (Sp) and the weight element (16) is secured to the portion of turns by hot adherization or cold adherization of the shell on the portion of turns.

13. A device for shifting and/or attenuating a vibration mode according to claim 9 and any one of claims 1 to 8 and 10 to 11, wherein the securing strap (88) is adapted to secure the weight element (16) to, and hold same on, the portion of turns (Sp) of the spring.

14. A device for shifting and/or attenuating a vibration mode according to any one of claims 1 to 13, wherein the weight element (16) consists of several sectors (16', 16", 16"').

15. A weight element (16) specifically intended to be associated with a helical spring (12) including a compression axis (X), a first spring end and a second spring end and a plurality of turns extending along the compression axis (X) between the first spring end and the second spring end, so as to form a device for shifting and/or attenuating a vibration mode, specifically a vehicle suspension, according to any one of claims 1 to 14, which comprises a core (44) made of a first material and one shell (46) made of a second material.
